# EUROPEAN PATENT APPLICATION

(11) **EP 4 109 081 A1**
(43) Date of publication of application: **28.12.2022**
(21) Application number: 20919666.6
(22) Date of filing: 28.08.2020
(51) Int. Cl.: G01N 23/04, G01N 23/083, G01N 23/10

(54) **ALERT OUTPUT DEVICE, ALERT OUTPUT METHOD, AND NON-TRANSITORY RECORDING MEDIUM**

(30) Priority: 21.02.2020 JP 2020028448
(71) Applicant: Hitachi, Ltd., Tokyo 100-8280 (JP)
(72) Inventor: YASUMURA Toru, Tokyo 100-8280 (JP); OZEKI Noboru, Tokyo 100-8280 (JP); IWASAWA Satoko, Tokyo 100-8280 (JP); MATSUBARA Daisuke, Tokyo 100-8280 (JP); KAJII Koh, Tokyo 100-8280 (JP); AKIRA Naoto, Tokyo 100-8280 (JP); KIMURA Junichi, Tokyo 100-8280 (JP); OKITA Hideki, Tokyo 100-8280 (JP)
(74) Representative: MERH-IP Matias Erny Reichl Hoffmann Patentanwälte PartG mbB
(86) International application number: PCT/JP2020/032740
(87) International publication number: WO 2021/166291

(57) **Abstract**

An alert output apparatus is configured to hold: image information indicating one or more inspection objects included in a photographic object of an image for which determination is to be executed; alert target item information indicating an alert target item; and co-occurrence item information indicating alert co-occurrence items each determined in advance as an item to be included in the image at the same time as the alert target item, and to output alert when determining that at least one inspection object out of the one or more inspection objects matches to the alert target item and satisfies a given condition, and when determining that no inspection object out of the one or more inspection objects matches to the alert target item but at least one inspection object out of the one or more inspection objects matches to at least one of the alert co-occurrence items.

## Description

### CLAIM OF PRIORITY

The present application claims priority from Japanese patent application JP 2020-028448 filed on February 21, 2020, the content of which is hereby incorporated by reference into this application.

### BACKGROUND OF THE INVENTION

The present invention relates to an alert output apparatus, an alert output method, and a non-transitory recording medium.

With a risk of terrorist attack on the rise, needs for utilization of an X-ray inspection apparatus in baggage inspection are increasing. In baggage inspection using an X-ray, whether a specific article is mixed in is checked generally by an inspector by looking at an X-ray image. In order to determine, with high precision, whether there is a specific article mixed into an X-ray image, the inspector is required to at least receive advanced training or to accumulate years of work experience. An unskilled inspector may accordingly miss the mixing in of a specific article in inspection. Thus, to reduce the risk of oversight on an inspector's part, the X-ray inspection apparatus has a mechanism for displaying alert for a place high in the density of a specific material.

One of technologies that are background art in a technical field of this invention is found in JP 2009-042134 A. In JP 2009-042134 A, there is a description "An X-ray irradiation apparatus 14 configured to irradiate an inspection object 5 with incident X rays 7 at a plurality of intensities from two or more different directions; an X-ray detection apparatus 16 configured to detect a thickness *x* of the inspection object from the intensities of transmitted X rays 8 transmitted through the inspection object, and from a plurality of X-ray transmission images; and an arithmetic unit 18 configured to identify a material of the inspection object by calculating an atomic number *Z* and an electron density *ρ* of the inspection object from the plurality of intensities, the intensities of the transmitted X rays, and the thickness are included. At least one of proportional constants A and B is approximately solved by utilizing linearity of an attenuation coefficient of an X ray in substances that have atomic numbers ranging from 4 to 30." (See Abstract.)

In the technology as described in JP 2009-042134 A, whether an inspection object in an image is an alert target item is determined based on the inspection object's substance, density, and shape. However, when a plurality of inspection objects are on top of one another, the technology as described in JP 2009-042134 A has a fear in that the densities of the materials of the plurality of inspection objects are determined to be higher than the materials' true densities, - resulting in a failure to detect an alert target item. With the technology as described in JP 2009-042134 A, an oversight of an alert target item may occur also when the alert target item itself has features hard to see in image information.

### SUMMARY OF THE INVENTION

It is therefore an object of at least one aspect of this invention to determine that an alert target item may be present even when direct detection of the alert target item itself is not possible, and ultimately to reduce the risk of oversight on an inspector's part.

In order to solve the above problems, the at least one aspect of this invention adopts the following structures. An alert output apparatus, comprising: a processor; and a memory, the alert output apparatus being coupled to an output apparatus, the memory being configured to hold: image information indicating each inspection object out of one or more inspection objects included in a photographic object of an image for which determination is to be executed; alert target item information indicating an alert target item; and co-occurrence item information indicating alert co-occurrence items each determined in advance as an item to be included in the image at the same time as the alert target item, the processor being configured to: determine, by referring to the alarm target item information, whether at least one of the one or more inspection objects is a match to the alert target item; determine, when it is determined that no inspection object out of the one or more inspection objects is a match to the alert target item, by referring to the co-occurrence item information, whether at least one inspection object out of the one or more inspection objects is a match to at least one of the alert co-occurrence items; and output alert to the output apparatus when it is determined that at least one inspection object out of the one or more inspection objects is a match to the alert target item and satisfies a given condition, and when it is determined that no inspection object out of the one or more inspection objects is a match to the alert target item but at least one inspection object out of the one or more inspection objects is a match to at least one of the alert co-occurrence items.

The at least one aspect of this invention can determine that an alert target item may be present even when direct detection of the alert target item itself is not possible, and ultimately can reduce the risk of oversight on an inspector's part.

Problems, configurations, and effects which are not mentioned above are explained in the following embodiments.

### DETAILED DESCRIPTION OF THE PREFERRED EMBODIMENTS

The present invention can be appreciated by the description which follows in conjunction with the following figures, wherein:
FIG. 1 is a block diagram for illustrating a configuration example of a co-occurrence information determination system according to the First Embodiment;
FIG. 2 is a block diagram for illustrating a configuration example of an image transmission terminal according to the First Embodiment;
FIG. 3 is a block diagram for illustrating a configuration example of an image determination server according to the First Embodiment;
FIG. 4 is an example of a prohibited item management DB according to the First Embodiment;
FIG. 5 is an example of a co-occurrence item management DB according to the First Embodiment;
FIG. 6 is an example of an association DB according to the First Embodiment;
FIG. 7 is a block diagram for illustrating a configuration example of an inspector terminal according to the First Embodiment;
FIG. 8 is a flow chart for illustrating an example of alert output determination processing according to the First Embodiment;
FIG. 9 is an example of a warning display screen to be displayed when being determined that a prohibited item (with a high probability) and a co-occurrence item of the prohibited item are present in an X-ray image according to the First Embodiment;
FIG. 10 is an example of a warning display screen to be displayed when being determined that a prohibited item (with a low probability) and a co-occurrence item of the prohibited item are present in an X-ray image according to the First Embodiment;
FIG. 11 is an example of a warning display screen to be displayed when being determined that a prohibited item (with a low probability) is present (but a co-occurrence item is not present) in an X-ray image according to the First Embodiment; and
FIG. 12 is an example of a warning display screen to be displayed when being determined that a prohibited item is not present but a co-occurrence item of a prohibited item is present in an X-ray image according to the First Embodiment.

### DETAILED DESCRIPTION OF THE PREFERRED EMBODIMENT

In the following, an embodiment of the present invention is explained referring the attached drawings. The embodiment is an example to achieve the present invention and does not limit a technical range of the present invention. In the drawings, the same configuration has the same reference letter.

### [First Embodiment]

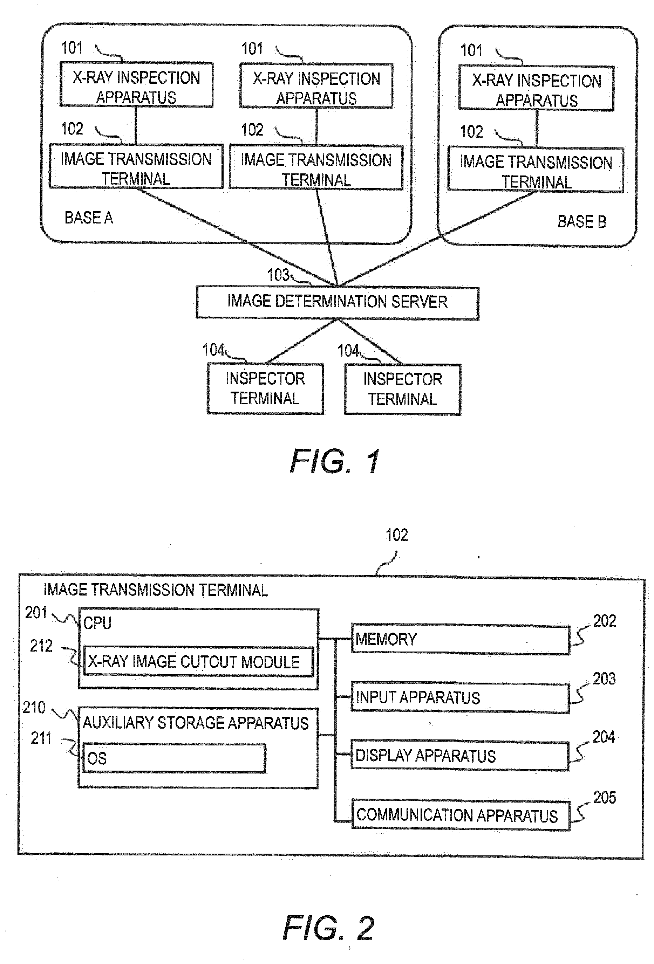

FIG. 1 is a block diagram for illustrating a configuration example of a co-occurrence information determination system. The co-occurrence information determination system includes, for example, one or more X-ray inspection apparatus 101, one or more image transmission terminals 102, an image determination server 103 (a co-occurrence information determination apparatus), and one or more inspector terminals 104.

Pieces of equipment included in the co-occurrence information determination system are coupled to one another via the Internet, an intranet, or another network, or via a display cable so as to be capable of communication to and from one another. In particular, the one or more X-ray inspection apparatus 101 are each coupled to one image transmission terminal 102 out .of the one or more image transmission terminals 102, the one or more image transmission terminals 102 are coupled to the image determination server 103, and the image determination server 103 is coupled to the one or more inspector terminals 104. The co-occurrence information determination system may use any communication method as long as data can be transferred.

The one or more X-ray inspection apparatus 101 are, for example, apparatus for irradiating a photographic object with an X-ray and measuring the amount of a transmitted X-ray, and are usable as baggage inspection apparatus or the like at an airport or other places. The one or more image transmission terminals 102 each divide a series of X-ray images photographed by one X-ray inspection apparatus 101 out of the one or more X-ray inspection apparatus 101, on, for example, an article-by-article basis, and transmit the resultant images to the image determination server 103.

The image determination server 103 determines whether a photographic object (baggage) of the X-ray images received from the image transmission terminal 102 is a safe item. The one or more inspector terminals 104 are terminals to be used by inspectors who check the X-ray images, and, for example, display a result output from the image determination server 103 and receive input to the image determination server 103.

As many X-ray inspection apparatus 101 as required and as many image transmission terminals 102 as required are installed at, for example, a base of baggage inspection (for instance, installed at positions from which a top of a conveyor for baggage inspection at a security checkpoint can be photographed). Similarly, as many image transmission terminals 102 as required are installed at the base of baggage inspection.

In the example of FIG. 1, Base A and Base B are bases of baggage inspection. Inspectors use the one or more inspector terminals 104 to visually check X-ray images of pieces of baggage photographed by at least two X-ray inspection apparatus 101, and make final determination on whether the piece of baggage is safe baggage.

The one or more inspector terminals 104 each include a display apparatus 704 and, when the image determination server 103 determines that there is a prohibited item or a co-occurrence item among photographic objects of X-ray images, use the display apparatus 704 to send feedback informing of the determination to an inspector. This feedback is not limited to display on the display apparatus 704, and may use any measure, for example, a feedback mechanism (lamp, for example) included in each of the one or more X-ray inspection apparatus 101, or a mechanism for stopping a belt conveyor on which baggage is conveyed. The one or more inspector terminals 104 are computers, such as personal computers (PCs) or tablet terminals.

Out of the one or more X-ray inspection apparatus 101, the one or more image transmission terminals 102, the image determination server 103, arid the one or more inspector terminals 104, two or more types of apparatus may be integrated into one. In particular, for example, a computer (PC, for example) belonging to each of the one or more X-ray inspection apparatus 101 may be provided to have functions of the image determination server 103 and of the one or more inspector terminals 104.

FIG. 2 is a block diagram for illustrating a configuration example of each of the one or more image transmission terminals 102. Each image transmission terminal 102 is configured from a computer including, for example, a control processing unit (CPU) 210, a memory 202, an input apparatus 203, a display apparatus 204, a communication apparatus 205, and an auxiliary storage apparatus 210, which are coupled to one another by a bus or a similar internal communication line.

The CPU 201 includes a processor, and executes a program stored in the memory 202. The memory 202 includes a ROM, which is a nonvolatile memory device, and a RAM, which is a volatile memory device. The ROM stores, for example, an invariant program (for example, BIOS). The RAM is a dynamic random access memory (DRAM) or other such high-speed volatile memory device, and temporarily stores a program to be executed by the processor and data to be used at a time of execution of the program.

The auxiliary storage apparatus 210 is, for example, a magnetic storage device (HDD), a flash memory (SSD), or other such large-capacity nonvolatile storage apparatus, and stores the program to be executed by an operating system (OS) 211 and the CPU 201 and the data to be used at the time of the execution of the program. In other words, the program is read from the auxiliary storage apparatus 210, and loaded onto the memory 202 to be executed by the CPU 201.

The image transmission terminal 102 may include an input interface and an output interface. The input interface is an interface to which the input apparatus 203, such as a keyboard and a mouse, is coupled, and which receives input from an operator. The output interface is an interface to which the output apparatus 204, such as a display apparatus and a printer, is coupled, and which outputs a result of executing a program in a format visually recognizable to the operator. The communication apparatus 205 is a network interface apparatus which controls communication to and from other apparatus by following a given protocol.

The program to be executed by the CPU 201 is provided to the computer through intermediation of a removable medium (such as CD-ROM or flash memory) or through the network, and is stored in the nonvolatile auxiliary storage apparatus 210 being a non-transitory storage medium. Therefore, the image transmission terminal 102 preferably includes an interface which reads data from the removable medium.

The CPU 201 includes, for example, an X-ray image cutout module 212. The X-ray image cutout module 212 divides a series of X-ray images received from one X-ray inspection apparatus 101 out of the one or more X-ray inspection apparatus 101, on an article-by-article basis, in accordance with, for example, a given algorithm, and transmits the resultant images to the image determination server 103.

The CPU 201 functions as the X-ray image cutout module 212 by, for example, operating in accordance with an X-ray image cutout program loaded onto the memory 202. The same applies to each relationship between a function module included in a CPU of another apparatus included in the co-occurrence information determination system and a program.

In a first embodiment of this invention, information used by each apparatus included in the X-ray automatic determination system does not depend on data structure and may have any data structure. For example, a data structure appropriately selected from a table, a list, a database, and a queue can be used to store the information.

Each apparatus included in the co-occurrence information determination system in the first embodiment is a computer system built on a single physical computer, or on a plurality of logically or physically configured computers, and may run in separate threads on the same computer, or on a virtual computer built from a plurality of physical computer resources.

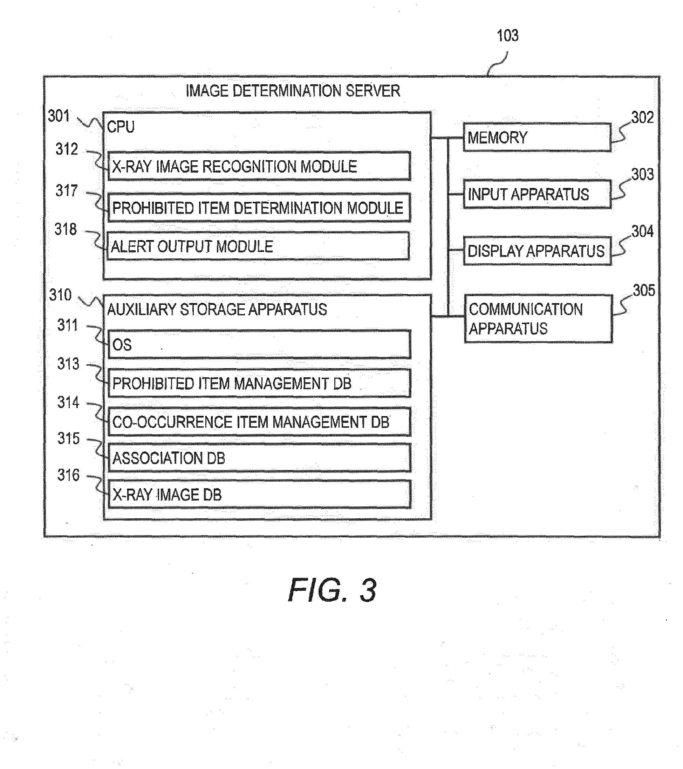

FIG. 3 is a block diagram for illustrating a configuration example of the image determination server 103. The image determination server 103 is configured from a computer including, for example, a CPU 301, a memory 302, an input apparatus 303, a display apparatus 304, a communication apparatus 305, and an auxiliary storage apparatus 310. Descriptions of the CPU 301, the memory 302, the input apparatus 303, the display apparatus 304, the communication apparatus 305, and the auxiliary storage apparatus 310 as hardware are the same as the descriptions of the CPU 201, the memory 202, the input apparatus 203, the display apparatus 204, the communication apparatus 205, and the auxiliary storage apparatus 210, and are therefore omitted.

The auxiliary storage apparatus 210 holds an OS 311. The auxiliary storage apparatus 310 also holds a prohibited item management database (DB) 313, a co-occurrence item management DB 314, an association DB 315, and an X-ray image DB 316.

The prohibited item management DB 313 defines a prohibited item and a mistakable item that is a general item resembling the prohibited item. A prohibited item in principle is an article about which alert is to be output, and a general item in principle is an article about which alert is not to be output. The prohibited item management DB 313 defines not only a prohibited item but also a mistakable item and the presence of a mistakable item is output, thereby improving inspection precision of an inspector.

The co-occurrence item management DB 314 defines a co-occurrence item and whether the co-occurrence. item is a co-occurrence item of a prohibited item or a co-occurrence item of a general item. A co-occurrence item is an article likely to be included among photographic objects of an X-ray image that includes a given article. This concept of a co-occurrence item includes an article that is a general item on its own but is likely to be present in an X-ray image at the same time as a prohibited item or a mistakable item.

For instance, a spray nozzle itself is not a prohibited item, but a perfume bottle, which is a prohibited item, is likely to include a spray nozzle. This enables the image determination server 103 to, despite determining that, for example, an X-ray image includes a spray nozzle but no perfume bottle, output alert about a strong possibility of inclusion of a perfume bottle, which is a prohibited item, because spray nozzles are defined as a co-occurrence item in the co-occurrence item management DB 314.

The X-ray image DB 316 holds, for example, X-ray images received from the one or more image transmission terminals 102 and image determination results about the X-ray images. An image determination result about an X-ray image includes, for example, a name of an article included in the X-ray image, whether an article included in the X-ray image is a prohibited item, a mistakable item, or a co-occurrence item, or a determination basis of the X-ray image determination.

The CPU 301 includes an X-ray image recognition module 312, a prohibited item determination module 317, and an alert output module 318. The X-ray image recognition module 312 identifies a type of an article from image data received from the one or more image transmission terminals 102, based on the material and the shape of an inspection object.

The prohibited item determination module 317 refers to the prohibited item management DB 313 and the co-occurrence item management DB 314 to determine whether the identified article is a prohibited item or a co-occurrence item (in a case of a co-occurrence item, whether the article is a co-occurrence item of a prohibited item or a co-occurrence item of a general item is further determined), and transmits a result of the determination to the alert output module 318. The alert output module 318 outputs alert based on the result of the determination executed by the prohibited item determination module 317 to the one or more inspector terminals 104.

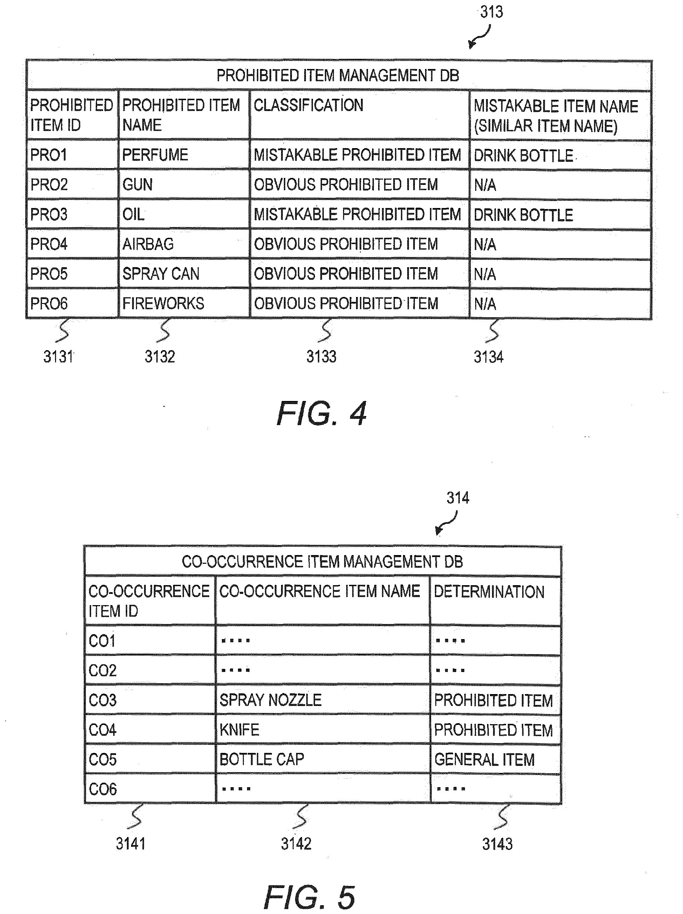

FIG. 4 is an example of the prohibited item management DB 313. The prohibited item management DB 313 includes, for example, a prohibited item ID field 3131, a prohibited item name field 3132, a classification field 3133, and a mistakable item name field 3134.

The prohibited item ID field 3131 holds an ID for identifying a prohibited item. The prohibited item name field 3132 holds a name of the prohibited item. The classification field 3133 holds a class of the prohibited item. In the example of FIG. 4, when there is a mistakable item that can be mistaken for the prohibited item, "mistakable prohibited item" is stored in the classification field 3133 and, when there is no mistakable item that can be mistaken for the prohibited item, "obvious prohibited item" is stored in the classification field 3133. The classification field 3133 thus indicates whether there is a mistakable item that can be mistaken for the prohibited item.

The mistakable item name field 3134 holds, when there is a mistakable item of the prohibited item, a name of the mistakable item. When there is no mistakable item of the prohibited item, for example, "N/A" meaning "not applicable" is stored in the mistakable item name field 3134.

FIG. 5 is an example of the co-occurrence item management DB 314. The co-occurrence item management DB 314 includes, for example, a co-occurrence item ID field 3141, a co-occurrence item name field 3142, and a determination field 3143. The co-occurrence item ID field 3141 holds an ID for identifying a co-occurrence item.

The co-occurrence item name field 3142 holds a name of the co-occurrence item. The determination field 3143 holds a value indicating whether the co-occurrence item is to be included in an X-ray image at the same time as a prohibited item, or to be included in an X-ray image at the same time as a general item (mistakable item).

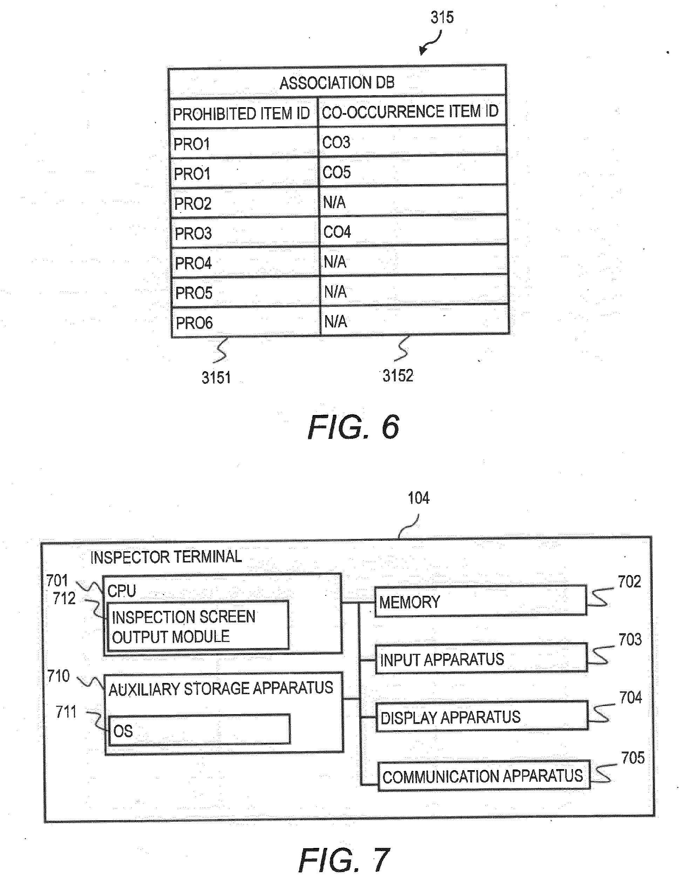

FIG. 6 is an example of the association DB 315. The association DB 315 includes, for example, a prohibited item ID field 3151 and a co-occurrence item ID field 3152. In the association DB 315, a co-occurrence item associated with a prohibited item is defined as an article included in an X-ray image at the same time as the prohibited item or a mistakable item of the prohibited item. When no co-occurrence item is associated with a prohibited item, for example, "N/A" meaning "not applicable" is stored in the co-occurrence ID field 3152.

FIG. 7 is a block diagram for illustrating a configuration example of each of the one or more inspector terminals 104. Each inspector terminal 104 is configured from a computer including, for example, a CPU 701, a memory 702, an input apparatus 703, the display apparatus 704, a communication apparatus 705, and an auxiliary storage apparatus 710. Descriptions of the CPU 701, the memory 702, the input apparatus 703, the display apparatus 704, the communication apparatus 705, and the auxiliary storage apparatus 710 as hardware are the same as the descriptions of the CPU 201, the memory 202, the input apparatus 203, the display apparatus 204, the communication apparatus 205, and the auxiliary storage apparatus 210, and are therefore omitted.

The auxiliary storage apparatus 710 holds an OS 711. The CPU 701 includes an inspection screen output module 712. The inspection screen output module 712 outputs, for example, an X-ray image and alert to the display apparatus 704 based on output from the alert output module 318 of the image determination server 103.

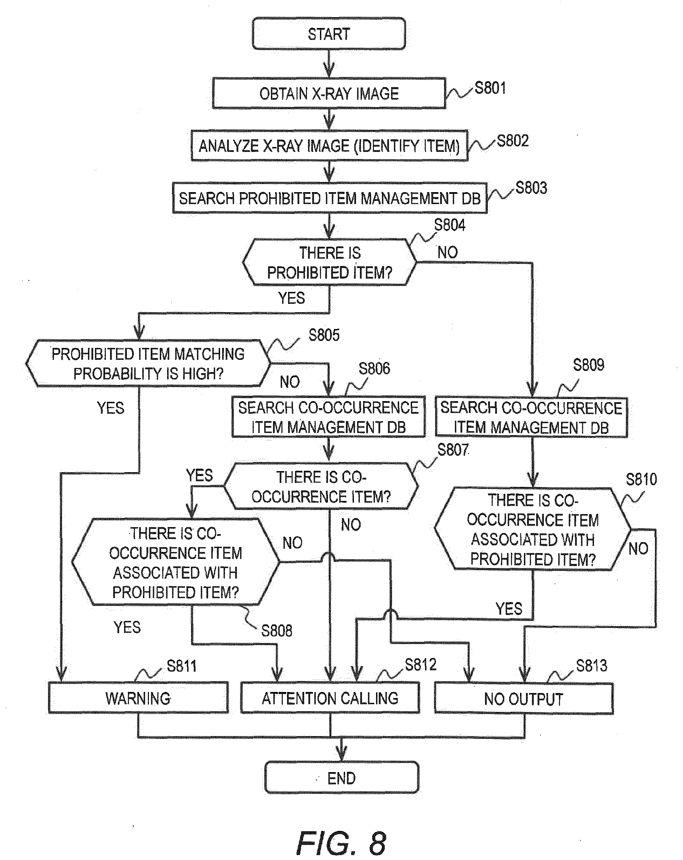

FIG. 8 is a flow chart for illustrating an example of alert output determination processing. It is assumed that values are registered in the prohibited item management DB 313, the co-occurrence item management DB 314, and the association DB 315 before the alert output processing of FIG. 8 is executed.

The one or more X-ray inspection apparatus 101 each photograph X-ray images of baggage and transmit the X-ray images to one image transmission terminal 102 out of the one or more image transmission terminals 102. The X-ray image cutout module 212 of the image transmission terminal 102 divides the received X-ray images on an article-by-article basis, and transmits the divided X-ray images to the image determination server 103 (Step S802). The X-ray image recognition module 312 registers, in the X-ray image DB 316, the X-ray images obtained in Step S802.

The X-ray image recognition module 312 identifies an item name of each of articles included in the received X-ray images, and calculates a probability at which the article is a match to the identified item (Step S802). To give a specific example, the X-ray image recognition module 312 identifies an item name of an article included in an X-ray image, based on at least one out of the material (organic, lightweight metal, light inorganic, or metal), the material density, and the shape of the article, and calculates a matching probability at which the article is a match. The method of identification, however, is not limited thereto.

The prohibited item determination module 317 searches the prohibited item management DB 313 (Step S803). The prohibited item determination module 317 determines, as a result of the search of the prohibited item management DB 313, whether at least one of the articles identified in Step S802 is included among the prohibited items of the prohibited item management DB 313 (Step S804).

When it is determined that at least one of the articles identified in Step S802 is included among the prohibited items of the prohibited item management DB 313 (Step S804: YES), the prohibited item determination module 317 determines whether the probability calculated in Step S802 as a probability at which the article is a match to the prohibited item is high (for example, whether the probability is equal to or higher than a given value) (Step S805).

When the prohibited item determination module 317 determines that at least one of the articles identified in Step S802 is included among the prohibited items of the prohibited item management DB 313 (Step S804: YES), the process may skip Step S805 and proceed to Step S806 described later.

The process may proceed to Step S805 also when the prohibited item determination module 317 determines, in Step S804, that at least one of the articles identified in Step S802 is included among the mistakable items of the prohibited item management DB 313. In this case, the prohibited item determination module 317 determines, in Step S805, whether the probability calculated in Step S802 as a probability at which the article is a match to the mistakable item is high (for example, whether the probability is equal to or higher than a given value).

When the prohibited item determination module 317 determines that the probability calculated in Step S802 as a probability at which the article is a match to the prohibited item is high (Step S805: YES), the alert output module 318 outputs information indicating warning to the one or more inspector terminals 104 (Step S811), and the alert output determination processing is ended.

When it is determined that the probability calculated in Step S802 as a probability at which the article is a match to the prohibited item is not high (Step S805: NO), the prohibited item determination module 317 searches the co-occurrence item management DB 314 (Step S806). The prohibited item determination module 317 determines, as a result of the search of the co-occurrence item management DB 314, whether at least one of the articles identified in Step S802 is a match to at least one of the co-occurrence items of the co-occurrence item management DB 314 (Step S807).

When it is determined that at least one of the articles identified in Step S802 is included among the co-occurrence items of the co-occurrence item management DB 314 (Step S807: YES), the prohibited item determination module 317 refers to the determination field 3143 of the co-occurrence item management DB 314 to determine whether this co-occurrence item is a co-occurrence item of a prohibited item or a co-occurrence item of a general item (Step S808). The process may proceed from Step S806 to Step S808 by omitting Step S807.

When it is determined in Step S808 that the co-occurrence item of interest is a co-occurrence item of a prohibited item, the prohibited item determination module 317 may refer to the association DB 315 to identify a prohibited item ID associated with the co-occurrence item of interest, and refer to the prohibited item management DB 313 to identify a prohibited item name and a mistakable item name that are associated with this prohibited item ID.

When the prohibited item determination module 317 determines that the co-occurrence item of interest is a co-occurrence item of a prohibited item (Step S808: YES), the alert output module 318 outputs information calling attention, which is lower in alert level than warning, to the one or more inspector terminals 104 (Step S812), and the alert output determination processing is ended. When the prohibited item determination module 317 determines that the co-occurrence item of interest is a co-occurrence item of a general item (Step S808: NO), output from the alert output module 318 is not executed (Step S813), and the alert output determination processing is ended.

When the prohibited item determination module 317 determines that the co-occurrence item of interest is a co-occurrence item of a general item (Step S808: NO), the alert output module 318 may output, in Step S812, information indicating that a co-occurrence item of a general item is included in the X-ray image (that is, information indicating a very slight possibility of inclusion of a prohibited item and accordingly safety) to the one or more inspector terminals 104.

When the prohibited item determination module 317 determines that the co-occurrence item of interest is a co-occurrence item of a general item (Step S808: NO), the process may proceed to Step S812. In this case, the alert output module 318 may output attention calling information indicating that a prohibited item may be included, although at a low probability, in the X-ray image to the one or more inspector terminals 104.

When it is determined that the articles identified in Step S802 do not include any prohibited item of the prohibited item management DB 313 (Step S804: NO), the prohibited item determination module 317 searches the co-occurrence item management DB 314 (Step S809). The prohibited item determination module 317 determines, as a result of the search of the co-occurrence item management DB 314, whether at least one of the articles identified in Step S802 is included among the co-occurrence items of the co-occurrence item management DB 314 (Step S810).

When the prohibited item determination module 317 determines that the co-occurrence item of interest is a co-occurrence item of a prohibited item (Step S810: YES), the alert output module 318 outputs information calling attention to the one or more inspector terminals 104 (Step S812), and the alert output determination processing is ended. When the prohibited item determination module 317 determines that the co-occurrence item of interest is a co-occurrence item of a general item (Step S810: NO), output from the alert output module 318 is not executed (Step S813), and the alert output determination processing is ended.

When the prohibited item determination module 317 determines that the co-occurrence item of interest is a co-occurrence item of a general item (Step S810: NO), the alert output module 318 may output, in Step S813, information indicating that a co-occurrence item of a general item is included in the X-ray image (that is, information indicating a very slight possibility of inclusion of a prohibited item and accordingly safety) to the one or more inspector terminals 104.

Irrespective of which one of the processing steps of from Step S811 to Step S813 is executed, the alert output module 318 transmits the X-ray images received from the one or more image transmission terminals 102 to the one or more inspector terminals 104. The alert output module 318 may also output, irrespective of which one of the processing steps of from Step S811 to Step S813 is executed, specific determination results to the one or more inspector terminals 104. Examples of those specific determination results described above include whether a prohibited item is included in an X-ray image and a probability thereof, whether a mistakable item is included in an X-ray image, whether a co-occurrence item is included in an X-ray image, whether a co-occurrence item included in an X-ray image is a co-occurrence item of a prohibited image or a co-occurrence item of a general item, and coordinate information indicating positions of articles that are a prohibited item and a co-occurrence item included in an X-ray image.

When the prohibited item determination module 317 determines that the probability calculated in Step S802 as a probability at which the article is a match to the prohibited item is high (Step S805: YES), but determines as a result of additional search of the co-occurrence item management DB 314 that a co-occurrence item is also present in the X-ray image, the alert output module 318 may include information indicating an item name of this co-occurrence item and information indicating whether this co-occurrence item is a co-occurrence item of a prohibited item or a co-occurrence item of a general item, in the information indicating warning in Step S811.

When the prohibited item determination module 317 determines in Step S804 that an X-ray image includes no prohibited item but a mistakable item, information indicating inclusion of the mistakable item may additionally be transmitted to the one or more inspector terminals 104 in Step S811 to Step S813. This enables the one or more inspector terminals 104 to display that there is a mistakable item included in the X-ray image, which reduces possibility of an inspector erroneously determining a mistakable item as a prohibited item, and accordingly improves inspection efficiency.

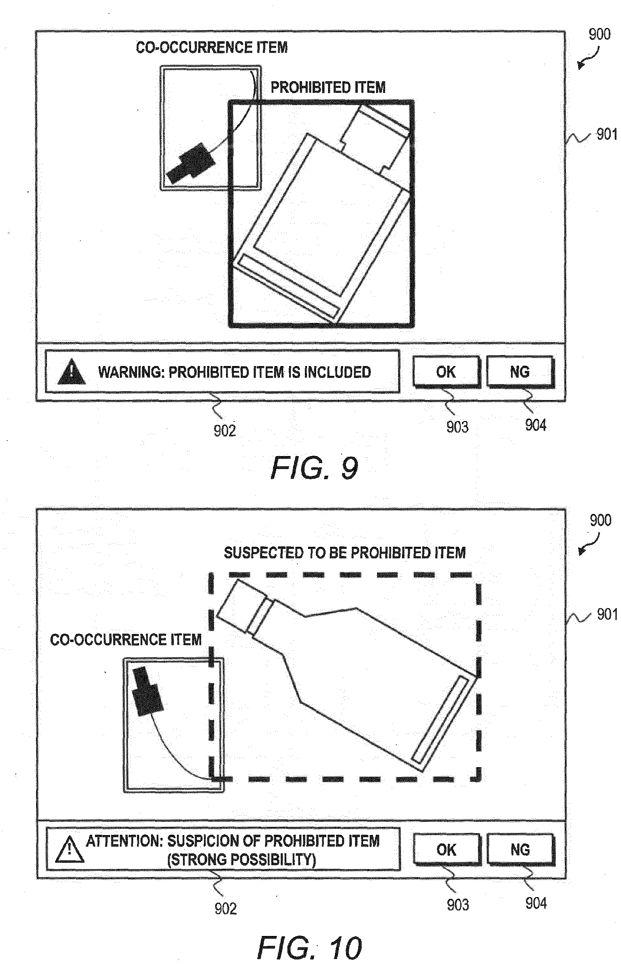

FIG. 9 to FIG. 12 are examples of a screen to be displayed on the display apparatus 704 by the inspection screen output module 712 based on output from the image determination server 103. A user (an inspector) of one inspector terminal 104 out of the one or more inspector terminals 104 performs visual inspection based on displayed co-occurrence information, and executes final determination about whether there is a prohibited item in a piece of baggage that is an inspection object. At the time of final determination, the inspector terminal 104 assists the inspector in visual check by highlighting the X-ray image and pixel areas of the prohibited item and a co-occurrence item, or by other measures.

FIG. 9 is an example of a warning display screen to be displayed when the prohibited item determination module 317 determines that a prohibited item (high probability is required of a prohibited item to be displayed on this screen) and a co-occurrence item of the prohibited item are present in an X-ray image. In other words, a display screen 900 of FIG. 9 is an example for a case in which the processing step of Step S811 is executed subsequently to the processing step of Step S805.

The display screen 900 of FIG. 9 is particularly an example of a case in which the prohibited item determination module 317 has determined that the probability of a match to the prohibited item which has been calculated in Step S802 is high (Step S805: YES), and has executed additional search of the co-occurrence item management DB 314.

The display screen 900 of FIG. 9 to FIG. 12 includes, for example, an X-ray image display area 901, a message display area 902, an "OK" button 903, and an "NG" button 904. The X-ray image display area 901 displays X-ray images received by the inspector terminal 104 from the image determination server 103. When it is determined that a prohibited item or a co-occurrence item is included in an X-ray image, a relevant pixel area of the prohibited item or the co-occurrence item may be cut out to be displayed alone and enlarged in the X-ray image display area 901. The message display area 902 displays a message corresponding to alert or the like received by the inspector terminal 104 from the alert output module 318.

The "OK" button 903 is a button selected when it is determined that no prohibited item is included in an X-ray image as a result of the inspector's visual check of the X-ray image. The "NG" button 904 is a button selected when it is determined that a prohibited item is included in an X-ray image as a result of the inspector's visual check of the X-ray image. Information indicating which of the "OK" button 903 and the "NG" button 904 has been selected for the X-ray image by the inspector is recommended to be stored in the X-ray image DB 316 in association with the X-ray image.

In the example of FIG. 9, it has been determined that a prohibited item (one having a high probability) and a co-occurrence item are present in an X-ray image, and the X-ray image display area 901 accordingly displays, in addition to the X-ray image, coordinate information of the prohibited item included in an X-ray image area, and coordinate information of the co-occurrence item associated with the prohibited item. Further, in the example of FIG. 9, it has been determined that the prohibited item (one having a high probability) and the co-occurrence item are present in the X-ray image, and the message display area 902 accordingly displays a warning message..

FIG. 10 is an example of the display screen 900 for calling attention that is to be displayed when the prohibited item determination module 317 determines that a prohibited item (low probability is required of a prohibited item to be displayed on this screen) and a co-occurrence item of the prohibited item are present in an X-ray image. In other words, the display screen 900 of FIG. 10 is an example for a case in which the processing step of Step S812 is executed subsequently to the processing steps of Step S805 to Step S808.

In the example of FIG. 10, it has been determined that a prohibited item (one having a low probability) and a co-occurrence item of the prohibited item are present in an X-ray image, and the X-ray image display area 901 accordingly displays, in addition to the X-ray image, coordinate information of the prohibited item included in an X-ray image area, and coordinate information of the co-occurrence item associated with the prohibited item.

The message display area 902 in the example of FIG. 10 displays an attention calling message. In the example of FIG. 10, the prohibited item determination module 317 has determined that the X-ray image includes a prohibited item, although one having a low probability, and a co-occurrence item of the prohibited item, and the displayed attention calling message accordingly reads "suspected to be a prohibited item (possibility: strong)."

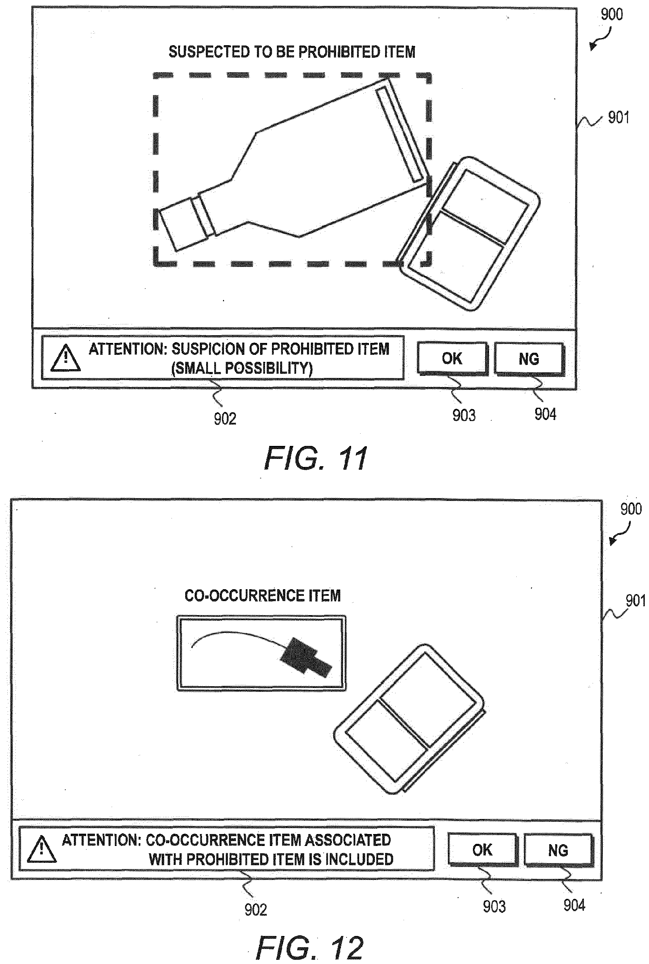

FIG. 11 is an example of the display screen 900 for calling attention that is to be displayed when the prohibited item determination module 317 has determined that a prohibited item (low probability is required of the prohibited item to be displayed on this screen) is present in an X-ray image (but not a co-occurrence item). In other words, the display screen 900 of FIG. 11 is an example for a case in which it has been determined in Step S807 that there is no co-occurrence item.

In the example of FIG. 11, it has been determined that a prohibited item (one having a low probability) is present in an X-ray image but not a co-occurrence item, the X-ray image display area 901 accordingly displays, in addition to the X-ray image, coordinate information of the prohibited item included in the X-ray image area.

The message display area 902 in the example of FIG. 11 displays an attention calling message. In the example of FIG. 11, the prohibited item determination module 317 has determined that the X-ray image includes a prohibited item, although one having a low probability, and no co-occurrence item of the prohibited item, and the displayed attention calling message accordingly reads "suspected to be a prohibited item (possibility: small)."

FIG. 12 is an example of the display screen 900 to be displayed when the prohibited item determination module 317 has determined that no prohibited item is present in an X-ray image but that a co-occurrence item of a prohibited item is present in the X-ray image. In other words, the display screen 900 of FIG. 12 is an example for a case in which it has been determined that there is no prohibited item in Step S804 but that there is a co-occurrence item associated with a prohibited item in Step S810.

In the example of FIG. 12, it has been determined that no prohibited item is present in an X-ray image but a co-occurrence item of the prohibited item is present in the X-ray image, and the X-ray image display area 901 accordingly displays, in addition to the X-ray image, coordinate information of the co-occurrence item of the prohibited item included in the X-ray image area. The message display area 902 in the example of FIG. 11 displays an attention calling message indicating the presence of a co-occurrence item in the X-ray image.

In the X-ray image display area 901 of FIG. 9 to FIG. 12, an article determined to be a co-occurrence item is displayed framed with a double border and an article determined to be a prohibited item is displayed framed with a dotted-line border for the purpose of description. However, any expression method, such as use of different frame colors for a co-occurrence item and a prohibited item or a color change for an X-ray image itself determined to have a prohibited image or a co-occurrence item included therein, is employable. The X-ray image display area 901 or the message display area 902 may additionally display names of the prohibited item, the co-occurrence item, and a prohibited item associated with the co-occurrence item, or some other display for assisting the inspector in interpreting.

In FIG. 9 to FIG. 12, any method of expressing alert is employable, and a pop-up message may be displayed on the display screen 900, or a lamp, a speaker, or a similar mechanism attached to the one or more X-ray inspection apparatus 101 or other apparatus may be used to issue alert or call attention. On the display screen 900, the matching probability or the like of a prohibited item may be displayed as a score, and the shape and the color of a frame displayed in the X-ray image display area 901, the color of light emitted from the lamp, and the volume of a sound output from the speaker may be varied or emphasized depending on the score.

Although not shown, when it is determined in Step S813 that there is to be no output (that is, when it is determined that no prohibited item and no co-occurrence item of a prohibited item are present in an X-ray image), the inspection screen output module 712 is recommended to display the X-ray image on the display apparatus 704 without displaying alert.

The image determination server 103 in the first embodiment determines contents of alert based not only on whether a prohibited item is present in a pixel area of an X-ray image but also on whether a co-occurrence item is present in the pixel area.

This enables the image determination server 103 to determine the presence of a prohibited item also from a co-occurrence item associated with the prohibited item, even when correct determination of the presence of a prohibited item itself is not possible. Determination precision is therefore improved and alert can be output more accurately. Thus, the risk of oversight on an inspector's part can ultimately be reduced.

In addition, the display screen 900 displays a prohibited item and a co-occurrence item in a mode easily recognizable to an inspector, and a pixel region to be viewed by the inspector can accordingly be narrowed down, with the result that the quality of visual inspection by the inspector improves.

This invention is not limited to the above-described embodiments but includes various modifications. The above-described embodiments are explained in details for better understanding of this invention and are not limited to those including all the configurations described above. A part of the configuration of one embodiment may be replaced with that of another embodiment; the configuration of one embodiment may be incorporated to the configuration of another embodiment. A part of the configuration of each embodiment may be added, deleted, or replaced by that of a different configuration.

For instance, although the first embodiment described above deals with an example of an inspection apparatus that photographs an X-ray image of baggage, any image taken by methods other than X-ray irradiation can be used as long as the image is recognizable as an image, and usable images include an image from which an apparatus can detect the composition, density, and shape of a specific material. The photographic object is not limited to baggage. For instance, the first embodiment is also employable for crime detection that uses an image photographed by a security camera, detection of a focus of disease that uses an image photographed by a magnetic resonance imaging (MRI) machine, and other applications.

The above-described configurations, functions, and processors, for all or a part of them, may be implemented by hardware: for example, by designing an integrated circuit. The above-described configurations and functions may be implemented by software, which means that a processor interprets and executes programs providing the functions. The information of programs, tables, and files to implement the functions may be stored in a storage device such as a memory, a hard disk drive, or an SSD (Solid State Drive), or a storage medium such as an IC card, or an SD card.

The drawings show control lines and information lines as considered necessary for explanations but do not show all control lines or information lines in the products. It can be considered that almost of all components are actually interconnected.

## Claims

1. An alert output apparatus, comprising:
a processor; and
a memory,
the alert output apparatus being coupled to an output apparatus,
the memory being configured to hold:
image information indicating each inspection object out of one or more inspection objects included in a photographic object of an image for which determination is to be executed;
alert target item information indicating an alert target item; and
co-occurrence item information indicating alert co-occurrence items each determined in advance as an item to be included in the image at the same time as the alert target item,
the processor being configured to:
determine, by referring to the alarm target item information, whether at least one of the one or more inspection objects is a match to the alert target item;
determine, when it is determined that no inspection object out of the one or more inspection objects is a match to the alert target item, by referring to the co-occurrence item information, whether at least one inspection object out of the one or more inspection objects is a match to at least one of the alert co-occurrence items; and
output alert to the output apparatus when it is determined that at least one inspection object out of the one or more inspection objects is a match to the alert target item and satisfies a given condition, and when it is determined that no inspection object out of the one or more inspection objects is a match to the alert target item but at least one inspection object out of the one or more inspection objects is a match to at least one of the alert co-occurrence items.

2. The alert output apparatus according to claim 1,
wherein the image information indicates, for each inspection object out of the one or more inspection objects, a probability at which the each inspection object is included in the photographic object, and
wherein the given condition is that a probability at which the at least one inspection object determined to be a match to the alert target item is a match to the alert target item is equal to or higher than a given value.

3. The alert output apparatus according to claim 2, wherein the processor is configured to:
output first alert to the output apparatus when it is determined that a probability at which the at least one inspection object determined as a match to the alert target item is a match to the alert target item is equal to or higher than the given value; and
output second alert lower in alert level than the first alert to the output apparatus when it is determined, for every single inspection object out of the one or more inspection objects, that a probability at which the single inspection object is a match to the alert target item is lower than the given value, but that at least one inspection object out of the one or more inspection objects is a match to at least one of the alert co-occurrence items.

4. The alert output apparatus according to claim 2, wherein the processor is configured to avoid outputting alert to the output apparatus when it is determined that no inspection object out of the one or more inspection objects is a match to any of the alert target item and the alert co-occurrence items.

5. The alert output apparatus according to claim 2, wherein the processor is configured to avoid outputting alert to the output apparatus when it is determined, for every single inspection object out of the one or more inspection objects, that a probability at which the single inspection object is a match to the alert target item is lower than the given value, and that the single inspection object is a match to none of the alert co-occurrence items.

6. The alert output apparatus according to claim 2,
wherein the co-occurrence item information indicates a general co-occurrence item determined in advance as an item to be included in the image at the same time as a general item, which is a non-alert target item, and
wherein the processor is configured to:
determine, by referring to the co-occurrence item information, whether at least one inspection object out of the one or more inspection objects is a match to the general co-occurrence item; and
output, when it is determined that no inspection object out of the one or more inspection objects is a match to any of the alert target item and the alert co-occurrence items, but that at least one inspection object out of the one or more inspection objects is a match to the general co-occurrence item, information indicating that the mistakable item is included among the one or more inspection objects, to the output apparatus.

7. The alert output apparatus according to claim 6 being configured to:
output first alert to the output apparatus when it is determined that a probability at which the at least one inspection object determined as a match to the alert target item is a match to the alert target item is equal to or higher than the given value; and
output third alert lower in alert level than the first alert to the output apparatus when it is determined, for every single inspection object out of the one or more inspection objects, that a probability at which the single inspection object is a match to the alert target item is lower than the given value, and that the single inspection object is a match to none of the alert co-occurrence items and the general co-occurrence item.

8. The alert output apparatus according to claim 1,
wherein the alert target item information indicates a mistakable item determined in advance as an item resembling the alert target item, and
wherein the processor is configured to output, when it is determined that at least one inspection object out of the one or more inspection objects is a match to the mistakable object by referring to the alert target item information, information indicating that the mistakable object is included among the one or more inspection objects, to the output apparatus.

9. An alert output method by an alert output apparatus, the alert output apparatus comprising:
a processor; and
a memory,
the alert output apparatus being coupled to an output apparatus,
the memory being configured to hold:
image information indicating each inspection object out of one or more inspection objects included in a photographic object of an image for which determination is to be executed;
alert target item information indicating an alert target item; and
co-occurrence item information indicating alert co-occurrence items each determined in advance as an item to be included in the image at the same time as the alert target item,
the alert output method comprising:
determining, by the processor, by referring to the alarm target item information, whether at least one of the one or more inspection objects is a match to the alert target item;
determining, by the processor, when it is determined that no inspection object out of the one or more inspection objects is a match to the alert target item, by referring to the co-occurrence item information, whether at least one inspection object out of the one or more inspection objects is a match to at least one of the alert co-occurrence items; and
outputting, by the processor, alert to the output apparatus when it is determined that at least one inspection object out of the one or more inspection objects is a match to the alert target item and satisfies a given condition, and when it is determined that no inspection object out of the one or more inspection objects is a match to the alert target item but at least one inspection object out of the one or more inspection objects is a match to at least one of the alert co-occurrence items.

10. A non-transitory computer-readable medium storing a program causing an alert output apparatus to execute alert outputting, the alert output apparatus comprising:
a processor; and
a memory,
the alert output apparatus being coupled to an output apparatus,
the memory being configured to hold:
image information indicating each inspection object out of one or more inspection objects included in a photographic object of an image for which determination is to be executed;
alert target item information indicating an alert target item; and
co-occurrence item information indicating alert co-occurrence items each determined in advance as an item to be included in the image at the same time as the alert target item,
the program causes the processor to execute:
processing that determines, by referring to the alarm target item information, whether at least one of the one or more inspection objects is a match to the alert target item;
processing that determines, when it is determined that no inspection object out of the one or more inspection objects is a match to the alert target item, by referring to the co-occurrence item information, whether at least one inspection object out of the one or more inspection objects is a match to at least one of the alert co-occurrence items; and
processing that alerts to the output apparatus when it is determined that at least one inspection object out of the one or more inspection objects is a match to the alert target item and satisfies a given condition, and when it is determined that no inspection object out of the one or more inspection objects is a match to the alert target item but at least one inspection object out of the one or more inspection objects is a match to at least one of the alert co-occurrence items.
